# EUROPÄISCHE PATENTSCHRIFT

(11) **EP 2 465 982 B1**
(45) Veröffentlichungstag und Bekanntmachung des Hinweises auf die Patenterteilung: **14.10.2015**
(21) Anmeldenummer: 10195209.1
(22) Anmeldetag: 15.12.2010
(51) Int. Cl.: D03D 19/00, B29C 70/22, D04H 3/04

(54) **Gewebe zur Verwendung in Verbundwerkstoffen und Verfahren zur Herstellung des Gewebes und eines Verbundwerkstoffkörpers**
Fabric for use in composite materials and method for producing the fabric and a composite material
Tissu pour l'utilisation dans des matières composites et procédé de fabrication du tissu et d'un corps en matière composite

(43) Veröffentlichungstag der Anmeldung: 20.06.2012
(73) Patentinhaber: Groz-Beckert KG, 72458 Albstadt (DE)
(72) Erfinder: Bischoff, Thomas, Dr., 21614 Buxtehude (DE); Afsar, Melike, 72458 Albstadt (DE)
(74) Vertreter: Rüger, Barthelt & Abel

(56) Entgegenhaltungen:
- DE-U1-202005 014 801
- US-A- 4 320 160
- US-A- 6 004 888

## Beschreibung

Die Erfindung betrifft ein Gewebe, das zum Aufbau in Verbundwerkstoffen, die auch als Composites bezeichnet werden, vorgesehen und ausgestaltet ist. Solche gewebeverstärkten Verbundwerkstoffe sind an sich bekannt.

In konventionellen Geweben entstehen durch die Bindung der Kettfäden mit den Schussfäden Fadenwellungen, die bei der Verwendung in Verbundwerkstoffen eine nicht ideal gestreckte Ausrichtung der Fäden verursachen. Die zur Verstärkung des Verbundwerkstoffs dienenden Verstärkungsfäden sind daher geknickt oder gewellt. Dies ist insofern problematisch, als die Verstärkungsfäden nur dann ihre optimalen Festigkeits- bzw. Steifigkeitseigenschaften aufweisen, wenn sie möglichst gestreckt angeordnet werden und Wellen oder Knicke mit kleinen Radien vermieden werden, die bei konventionellen Geweben im Bereich der Bindungsstellen zwischen Kett- und Schussfäden auftreten. Die Welligkeit der Verstärkungsfäden kann dabei zwar verringert werden, wenn grö-βere Abstände zwischen den Bindungsstellen, das heißt grö-βere Flottierungen vorgesehen werden. Dies erhöht auch die Drapierfähigkeit des Gewebes, wenn dieses an die dreidimensionale Form des Verbundwerkstoffkörpers angepasst werden muss. Allerdings können bei großen Flottierungen unerwünschte Verschiebungen der Verstärkungsfäden auftreten, so dass sich beim Drapieren des Gewebes zur Formung des Verbundwerkstoffkörpers Stellen mit unzureichender Verstärkung bilden können bzw. die Fadendichte an anderen Stellen zu groß ist.

Es ergeben sich häufig auch Schwierigkeiten, wenn die konventionellen Gewebe bei der Herstellung von sogenannten Preforms eingesetzt werden. Bei diesen Preforms werden ein oder mehrere Gewebelagen übereinander gelegt und vorgeformt, um daraus später in einem anschließenden Prozessschritt den gewünschten Verbundwerkstoffkörper in einer Bauteilform herzustellen. Da die Belegungszeit der Bauteilform möglichst gering gehalten werden soll, werden häufig vor der endgültigen Erstellung des Verbundwerkstoffkörpers eine oder mehrere Preforms hergestellt, die dann in kürzerer Zeit zu einem Verbundwerkstoffkörper in der Bauteilform verbunden werden können. Die Preform wird vorgeformt, so dass beim Einlegen der Preform in die Bauteilform nur noch kleinere und wenig zeitaufwendige Anpassungsarbeiten notwendig sind. Deswegen ist es erforderlich, dass das Gewebe der Preform in eine dreidimensionale Form gebracht werden kann, die anschließend zumindest in bestimmten Bereichen noch anpassbar sein muss. Hierzu werden bisher Bindemittel in Form von Sprays, Pulvern oder Vlieslagen, die auf das Gewebe aufkaschiert bzw. aufgesprüht werden, um die Formstabilität der Preform sicherzustellen und gleichzeitig die Drapierfähigkeit des Gewebes für die Weiterbearbeitung zu erhalten. Allerdings lässt sich dies oft nicht reproduzierbar durchführen und entweder leidet die Formstabilität der Preform oder die Drapierfähigkeit der Preform bei der Weiterverarbeitung zum Verbundswerkstoffkörper.

Aus US 4 320 160 ist ein Gewebe für Verbundwerkstoffkörper bekannt. Dieses Gewebe weist ein Verstärkungssystem aus Verstärkungsfäden und Bindefäden auf, die zur Herstellung der Bindung des Verstärkungssystems dienen. Als Bindefäden werden Bindekettfäden entweder mit Bindeschussfäden durch einfache Bindungen verbunden oder die Bindekettfäden gehen mit den Verstärkungskettfäden bzw. den Verstärkungsschussfäden des Verstärkungssystems eine Bindung ein.

Das aus US 4 320 160 bekannte Gewebe hat den Nachteil, dass aufgrund der vorgeschlagenen Bindungsarten die Fadenspannung der Bindefäden eine unerwünschte Welligkeit der Verstärkungsfäden des Verstärkungssystems beeinflusst. Das heißt, dass die Fadenwelligkeit der Verstärkungsfäden nur dann verhindert werden kann, wenn die Fadenspannung der Bindefäden gering ist. Dies führt allerdings dazu, dass keine ausreichende Verschiebefestigkeit der Verstärkungsfäden des Verstärkungssystems gewährleistet werden kann, was beim Drapieren des Gewebes zur Herstellung des Verbundwerkstoffkörpers nachteilig ist. Soll die gewünschte Verschiebefestigkeit erreicht werden, verursacht die Fadenspannung zum einen eine Wellung der Verstärkungsfäden und zum anderen besteht die Gefahr, dass die Verstärkungsgarne durch die große Fadenspannung des Bindefadens zwischen den Bindungspunkten gebündelt und dadurch eine unerwünschte Gitterstruktur mit zu großen Fadenabständen zwischen den Verstärkungsfäden entsteht.

Auch die DE 20 2005 014 801 U1 offenbart ein Gewebe mit einem Verstärkungssystem aus Verstärkungsfäden und Bindefäden zur Bindung des Verstärkungssystems. Auch hier erfolgt die Bindung zwischen den Bindefäden und der Verstärkungsfäden, was die im Zusammenhang mit US 4 320 160 beschriebenen Nachteile mit sich bringt.

Ausgehend hiervon kann es als eine Aufgabe der vorliegenden Erfindung angesehen werden, ein Gewebe zur Herstellung von Verbundwerkstoffen bzw. Verbundswerkstoffkörpern zu schaffen, das einerseits eine gute Handhabbarkeit bei der Formgebung des Gewebes gewährleistet und gleichzeitig eine ausreichende mechanische Stabilität des herzustellenden Verbundwerkstoffs bzw. Verbundwerkstoffkörpers sicherstellt.

Diese Aufgabe wird durch ein Gewebe mit den Merkmalen des Patentanspruchs 1, ein Verfahren zur Herstellung des Gewebes mit den Merkmalen des Patentanspruches 13 sowie ein Verfahren zur Herstellung eines Verbundwerkstoffkörpers mit den Merkmalen des Patentanspruches 15 gelöst.

Das erfindungsgemäße Gewebe weist ein Verstärkungssystem aus Verstärkungsschussfäden und Verstärkungskettfäden auf. Die Verstärkungskettfäden bilden eine erste Verstärkungslage, die auf eine zweite Verstärkungslage aufgelegt ist, wobei die zweite Verstärkungslage aus den Verstärkungsschussfäden gebildet ist. Somit liegen die Verstärkungsschussfäden und die Verstärkungskettfäden bindungsfrei gekreuzt übereinander.

Das Gewebe weist zudem ein Bindesystem aus Bindekettfäden und Bindeschussfäden auf. Die Bindekettfäden und die Bindeschussfäden sind an Bindungsstellen miteinander verbunden. Eine Bindung zwischen den Fäden des Bindesystems und den Fäden des Verstärkungssystems besteht nicht. Das Verstärkungssystem ist zwischen den Bindekettfäden und den Bindeschussfäden angeordnet und wird ausschließlich durch die Bindung im Bindesystem gehalten und fixiert. Das Bindesystem ist dabei als Drehersystem ausgeführt. Die Bindekettfäden sind entweder als Steherkettfaden oder als Dreherkettfaden ausgeführt. Sie bilden mehrere Bindekettfadenpaare aus jeweils einem Steherkettfaden und einem Dreherkettfaden, die mit den Bindeschussfäden zusammenwirken, um die Bindung herzustellen. Das Drehersystem kann als Halbdreher- oder Volldrehersystem ausgeführt sein. Der Steherkettfaden und der Dreherkettfaden eines Kettfadenpaars kreuzen sich an oder zwischen den Bindungsstellen. Der jeweilige Bindeschussfaden ist an einer Bindungsstelle zwischen dem Steherkettfaden und dem Dreherkettfaden aufgenommen und gehalten. Es entsteht eine gute Fixierung des Bindeschussfadens durch das Bindekettfadenpaar an jeder Bindungsstelle. Auf diese Weise kann eine ausreichende Verschiebefestigkeit der Fäden des Bindesystems und dadurch auch der Fäden des Verstärkungssystems gewährleistet werden. Eine hohe Fadenspannung der Fäden im Bindesystem ist nicht erforderlich. Auf diese Weise kann eine unerwünschte Welligkeit der Fäden des Verstärkungssystems vermieden werden. Dies wiederum hat eine sehr gute mechanische Stabilität des Gewebes zur Folge, da die Verstärkungsschussfäden und die Verstärkungskettfäden gestreckt in der jeweiligen Verstärkungslage verlaufen können und lediglich die Krümmungen und Radien aufweisen, die durch die Form des Verbundwerkstoffkörpers bei dessen Herstellung erforderlich sind.

Bei einem bevorzugten Ausführungsbeispiel verlaufen die Bindekettfäden angrenzend an die zweite Verstärkungslage aus Verstärkungsschussfäden und die Bindeschussfäden verlaufen angrenzend an die erste Verstärkungslage aus Verstärkungskettfäden.

Bei einer weiteren bevorzugten Ausführungsform ist die mindestens eine Kreuzungsstelle zwischen dem Steherkettfaden und dem Dreherkettfaden eines Kettfadenpaars unmittelbar an der Bindungsstelle mit dem jeweiligen Bindeschussfaden vorgesehen. Da an der Bindungsstelle die Fäden des Bindesystems zwischen den Fäden des Verstärkungssystems hindurch greifen, also die beiden Verstärkungslagen durchsetzen, ist es vorteilhaft, den dadurch ohnehin notwendigen Abstand zwischen den benachbarten Verstärkungskettfäden bzw. den benachbarten Verstärkungsschussfäden zu nutzen und auch dort die wenigstens eine Kreuzungsstelle von Steherkettfaden und Dreherkettfaden vorzusehen.

Die Bindekettfäden verlaufen gegenüber den Verstärkungskettfäden vorzugsweise kreuzungsfrei. Entsprechend sind vorzugsweise die Bindeschussfäden vorzugsweise kreuzungsfrei gegenüber den Verstärkungsschussfäden angeordnet. Anders ausgedrückt verlaufen alle Kettfäden in eine Kettfadenrichtung und alle Schussfäden in eine Schussfadenrichtung, die gegenüber der Kettfadenrichtung in etwa rechtwinklig ausgerichtet ist. Dies ermöglicht eine einfache Herstellung des Gewebes auf einer Webmaschine.

Die Anzahl der Kreuzungsstellen zwischen den Verstärkungsschussfäden und den Verstärkungskettfäden ist gleich oder größer als die Anzahl der Bindungsstellen im Bindesystem. Anders ausgedrückt ist die Anzahl der Bindeschussfäden geringer als die Anzahl der Verstärkungsschussfäden. Außerdem kann die Anzahl der Bindekettfadenpaare maximal so groß sein, wie die Anzahl der Verstärkungskettfäden. Der Abstand zwischen den Bindungsstellen im Bindesystem wird vorzugsweise so groß wie möglich gewählt, so dass entsprechend große Flottierungen im Bindesystem entstehen. Der Abstand zwischen den Bindungsstellen im Bindesystem kann im Gewebe in dessen Gewebelängsrichtung und/oder in Gewebequerrichtung variieren, was von dem herzustellenden Verbundwerkstoff und insbesondere der Form des daraus herzustellenden Verbundwerkstoffkörpers abhängt. Wird an einer Stelle des Gewebes eine große Verschiebefestigkeit gewünscht, so ist die Flottierung dort kleiner und damit die Anzahl der Bindungsstellen größer als an anderen Stellen. Umgekehrt kann dann, wenn die Drapierbarkeit des Gewebes an bestimmten Stellen vergrößert werden soll, eine größere Flottierung im Bindesystem vorgesehen sein.

Insbesondere wird für die Verstärkungsschussfäden und für die Verstärkungskettfäden ein Verstärkungsgarn gewählt, das verschieden ist vom Bindegarn, aus dem die Bindekettfäden und die Bindeschussfäden gemacht sind. Für die mechanische Steifigkeit oder Festigkeit des Verbundwerkstoffs sind hauptsächlich die Verstärkungsfäden des Verstärkungssystems verantwortlich. Das Verstärkungsgarn kann beispielsweise Karbonfasern und/oder Aramidfasern und /oder Glasfasern aufweisen. Das Verstärkungsgarn weist bei einem bevorzugten Ausführungsbeispiel einen Flachquerschnitt auf, bei dem die Dimension in eine Breitenrichtung größer ist als die Dimension quer dazu in eine Höhenrichtung. Im Unterschied dazu ist das Bindegarn im Querschnitt z.B. kreisrund. Der Titer oder der Querschnitt des Bindegarns ist insbesondere kleiner als der Titer oder der Querschnitt des Verstärkungsgarns. Auf diese Weise kann der Massenanteil des Bindegarns gegenüber dem Verstärkungsgarn im Gewebe gering gehalten werden. Außerdem ist der Platzbedarf zwischen zwei benachbarten Fäden des Verstärkungssystems an den Bindungsstellen für die Bindefäden des Bindesystems gering, so dass die Verstärkungsfäden mit geringem Abstand eng aneinander angeordnet werden können. Der Titer des Bindegarns beträgt vorzugsweise maximal 500 dtex.

Bei einer bevorzugten Ausführungsform wird ein Bindegarn eingesetzt, dessen Material sich bei der Herstellung des Verbundwerkstoffes gut und im Wesentlichen vollständig mit dem Kunststoff des Verbundswerkstoffes verbindet. Die Materialwahl des Bindegarns kann von dem verwendeten Kunststoff für den Verbundwerkstoff abhängig sein. Insbesondere weist das Bindegarn ein Material auf, dessen Schmelztemperatur maximal so groß ist, wie die Temperatur, die bei der Herstellung des Verbundwerkstoffes bzw. des Verbundwerkstoffkörpers erreicht werden, so dass eine Schmelzklebeverbindung zwischen den Bindegarnen und der Verstärkungsgarnen einerseits und mit dem Kunststoff des Verbundwerkstoffes andererseits erfolgt. Bevorzugt wird der Titer des Bindegarns derart festgelegt, dass die interlaminare Scherfestigkeit des herzustellenden Verbundwerkstoffes bzw. Verbundswerkstoffkörpers von einem durch das Verstärkungssystem vorgegebenen Sollwert maximal um einen vorgegebenen Toleranzwert abweicht. Beispielsweise kann der Massenanteil des Bindegarns im Bindesystem so vorgegeben werden, dass die allein durch das Verstärkungssystem erreichte interlaminare Scherfestigkeit maximal um einen Toleranzwert von beispielsweise 5% abweicht. Dies kann dann von Bedeutung sein, wenn sich das verwendete Bindegarn nicht oder nur schlecht mit dem Kunststoff des herzustellenden Verbundwerkstoffs verbinden kann.

Als Bindegarn kommen beispielsweise Phenoxy-Garne in Betracht, wie etwa Grilon MS® der Firma EMS Chemie. Es können auch andere Garne insbesondere Schmelzklebegarne verwendet werden, wie etwa Co-Polyester-Garne.

Es ist außerdem vorteilhaft, wenn das Bindegarn einen Kern und einen den Kern umschließenden Mantel aufweist, wobei Kern und Mantel bevorzugt aus verschiedenen Materialien bestehen. Dabei ist insbesondere die Schmelztemperatur des Mantels geringer als die des Kerns. Durch ein solches Bindegarn kann eine Schmelzverbindung bei der Herstellung des Verbundwerkstoffes erreicht werden, wobei der Kern stabil bleibt. Der Kern hält mithin die Struktur des Gewebes aufrecht, während durch den Mantel eine Schmelzklebeverbindung hervorgerufen werden kann.

Die Verwendung von Schmelzklebegarnen bzw. Garnen mit einem Kern und einem Mantel mit unterschiedlichen Schmelztemperaturen im Bindesystem erlaubt zudem eine einfache Herstellung von Preforms. Das Gewebe kann in der gewünschten Form der Preform abgelegt und erforderlichenfalls zur Zwischenfixierung bereichsweise durch thermische Einwirkung mit den Fäden des Verstärkungssystems bzw. mit weiteren Gewebelagen der Preform verbunden werden. Zusätzliche Bindematerialen, wie Pulver oder Spray können dabei entfallen.

Ein solches Gewebe kann sehr einfach in einem Verfahren in einer Webmaschine hergestellt werden. Dies geschieht dadurch, dass die Verstärkungsschussfäden und die Bindeschussfäden abwechselnd in einer vorgegebenen Reihenfolge eingetragen bzw. eingeschossen werden. Während eines Schusseintrags mit einem Verstärkungsfaden befinden sich alle Verstärkungskettfäden immer in demselben Fach, vorzugsweise dem Oberfach. Während eines Schusseintrags mit einem Bindeschussfaden befinden sich die Dreherkettfäden jeweils in demselben Fach, vorzugsweise dem Oberfach, während sich die Steherkettfäden des Kettfadenpaars von Bindekettfäden sowie die Verstärkungskettfäden im jeweils anderen Fach, vorzugsweise dem Unterfach befinden. Vorzugsweise werden der Dreherkettfaden und der Steherkettfaden unmittelbar vor und/oder unmittelbar nach der Bindungsstelle mit dem Bindeschussfaden überkreuzt. Auf diese Weise entsteht das Gewebe für den Verbundwerkstoff, wie es eingangs geschildert wurde. Bei der Herstellung werden die Verstärkungskettfäden vorteilhafterweise in einem einzigen Webschaft geführt. Dabei können die Steherkettfäden und die Dreherkettfäden in unterschiedlichen Webschäften der Webmaschine geführt werden.

Weitere vorteilhafte Ausgestaltungen der Erfindung ergeben sich aus den abhängigen Patentansprüchen sowie der Beschreibung. Die Beschreibung beschränkt sich auf wesentliche Merkmale der Erfindung. In der Zeichnung sind vorteilhafte Ausgestaltungen der Erfindung anhand von Ausführungsbeispielen dargestellt, die ergänzend heranzuziehen sind. Es zeigen:
Figur 1 ein Ausführungsbeispiel eines Gewebes in schematischer Draufsicht,
Figur 2 zwei aufeinanderfolgende Bindungsstellen des Gewebes aus Figur 1 in einer ersten Bindungsart im Bindesystem in schematische Draufsicht auf das Gewebe,
Figur 3 die Bindungsstellen aus Figur 2 in einem Schnitt durch das Gewebe gemäß Schnittlinie III - III,
Figur 4 zwei aufeinanderfolgende Bindungsstellen des Gewebes aus Figur 1 in einer zweiten Bindungsart im Bindesystem in schematischer Draufsicht,
Figur 5 die Bindungsstellen aus Figur 4 in einem Schnittbild durch das Gewebe gemäß Schnittlinie V- V,
Figur 6 ein Gewebe gemäß Figur 1 in perspektivische schematischer Darstellung in einer dreidimensionalen Form zur Herstellung einer Preform,
Figur 7 den Aufbau eines Bindegarns mit Kern und Mantel sowie eines Verstärkungsgarns jeweils in perspektivischer Darstellung,
Figur 8 eine schematische blockschaltbildähnliche Darstellung einer Webmaschine während des Eintrags eines Bindeschussfadens und
Figur 9 die Webmaschine nach Figur 8 während des Eintrags eines Verstärkungsschussfadens.

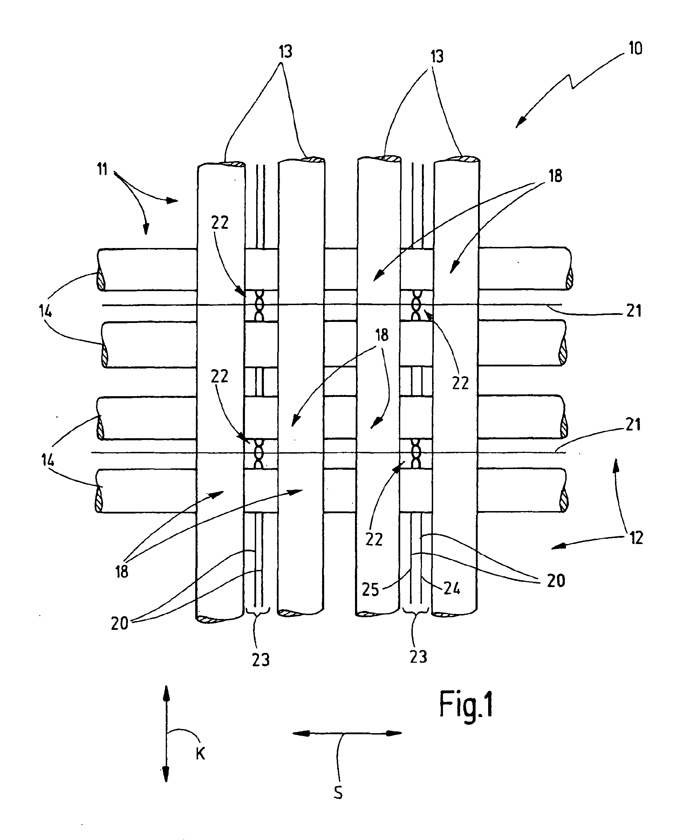

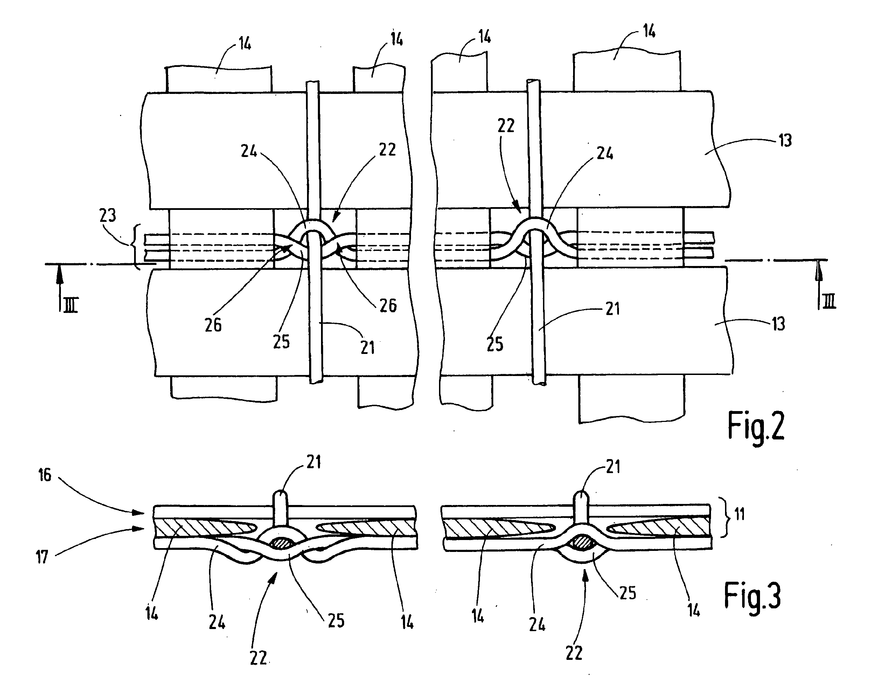

Figur 1 zeigt eine schematische Draufsicht auf ein Gewebe 10, das zur Herstellung eines Verbundwerkstoffs bzw. eines Verbundwerkstoffkörpers, insbesondere eines Verbundes aus Gewebe 10 und Kunststoff vorgesehen ist. Das Gewebe 10 weist ein Verstärkungssystem 11 sowie ein Bindesystem 12 auf. Das Verstärkungssystem 11 aus Verstärkungskettfäden 13 und Verstärkungsschussfäden 14 hat die Aufgabe, den Verbundwerkstoff bzw. dem Verbundwerkstoffkörper die gewünschten mechanischen Eigenschaften im Zusammenwirken mit einem weiteren Material, insbesondere Kunststoff, zu verleihen. Dabei verbessert das Verstärkungssystem 11 die Festigkeit und Steifigkeit des Verbundwerkstoffs. Beim Ausführungsbeispiel sind die Verstärkungskettfäden 13 und die Verstärkungsschussfäden 14 aus einem Verstärkungsgarn 15 hergestellt, das einen Flachquerschnitt aufweist, wie dies beispielsweise in den Figuren 3, 5 und 7 zu erkennen ist. Der Flachquerschnitt ist dadurch charakterisiert, dass seine Breite in Breitenrichtung B größer ist als seine Höhe in Höhenrichtung H rechtwinklig zu Breitenrichtung B. Insbesondere kann die Breite zumindest um den Faktor 2 größer sein als die Höhe H des Verstärkungsgarns 15. Beim Ausführungsbeispiel ist der Querschnitt elliptisch bzw. oval.

Zur Gewährleistung der optimalen mechanischen Eigenschaften soll eine Welligkeit der Verstärkungsfäden 13, 14 vermieden werden. Zu diesem Zweck sind die Verstärkungskettfäden 13 in einer ersten Verstärkungslage 16 parallel zueinander angeordnet. Die Verstärkungsschussfäden 14 erstrecken sich rechtwinklig hierzu und bilden eine zweite Verstärkungslage 17. In Draufsicht auf das Gewebe 10 in Figur 1 liegt die erste Verstärkungslage 16 oberhalb der zweiten Verstärkungslage 17. die ist jedoch eine Frage, aus welcher Richtung das Gewebe 10 betrachtet wird. Die Verstärkungskettfäden 14 und die Verstärkungsschussfäden 13 sind bindungsfrei aufeinander gelegt. Sie bilden eine Vielzahl von bindungsfreien Kreuzungsstellen 18. Die Verstärkungsfäden 13, 14 des Verstärkungssystems 11 verlaufen mit möglichst geringem Abstand nebeneinander, so dass sich ein dichtes Gewebe 10 ergibt. Die Zeichnung ist lediglich eine schematische Darstellung und nicht maßstabsgetreu.

Das Verstärkungsgarn 15 weist Kohlefasern, Aramidfasern oder Glasfasern auf bzw. ist aus derartigen Fasern gebildet. Alternativ können auch andere Verstärkungsgarne 15 Verwendung finden. Beispielsweise ist es möglich, das Verstärkungsgarn als sogenanntes Roving auszuführen, bei dem eine Vielzahl von einzelnen Fasern unverdrillt parallel zueinander angeordnet sind und das Verstärkungsgarn 15 bilden.

Die Verstärkungskettfäden 13 und die Verstärkungsschussfäden 14 verlaufen in ihrer jeweiligen Verstärkungslage 16 bzw. 17 gestreckt. Darunter ist hier zu verstehen, dass sich keine Knicke oder Wellen der Verstärkungsfäden 13, 14 durch die Bindung im Gewebe 10 ergeben. Radien oder Krümmungen der Verstärkungsfäden 13, 14 entstehen lediglich durch die Formgebung des Gewebes im Verbundwerkstoff bzw. Verbundwerkstoffkörper beim Drapieren. Auf diese Weise kann eine optimale Festigkeit und Steifigkeit erreicht werden.

Das Bindesystem 12 besteht aus Bindekettfäden 20 und Bindeschussfäden 21. Die Bindekettfäden verlaufen parallel zueinander und parallel zu den Verstärkungskettfäden 13 in Kettfadenrichtung K. Rechtwinklig dazu verläuft die Schussfadenrichtung S, in der sich sowohl die Verstärkungsschussfäden 14, als auch die Bindeschussfäden 21 erstrecken. Die Bindeschussfäden 21 verlaufen beim Ausführungsbeispiel angrenzend an die erste Verstärkungslage 16, während die Bindekettfäden 20 angrenzend an die zweite Verstärkungslage 17 verlaufen. Auf diese Weise schließen die Bindekettfäden 20 und die Bindeschussfäden 21 das Verstärkungssystem 11 sandwichartig ein. Eine Bindung des Gewebes 10 wird ausschließlich durch das Bindesystem 12 bewirkt. Hierfür sind die Bindekettfäden 20 mit den Bindeschussfäden 21 an Bindungsstellen 22 verbunden. Dies erfolgt beim Gewebe 10 durch eine so genannte Dreherbindung, so dass das Bindesystem 12 auch als Drehersystem bezeichnet werden könnte.

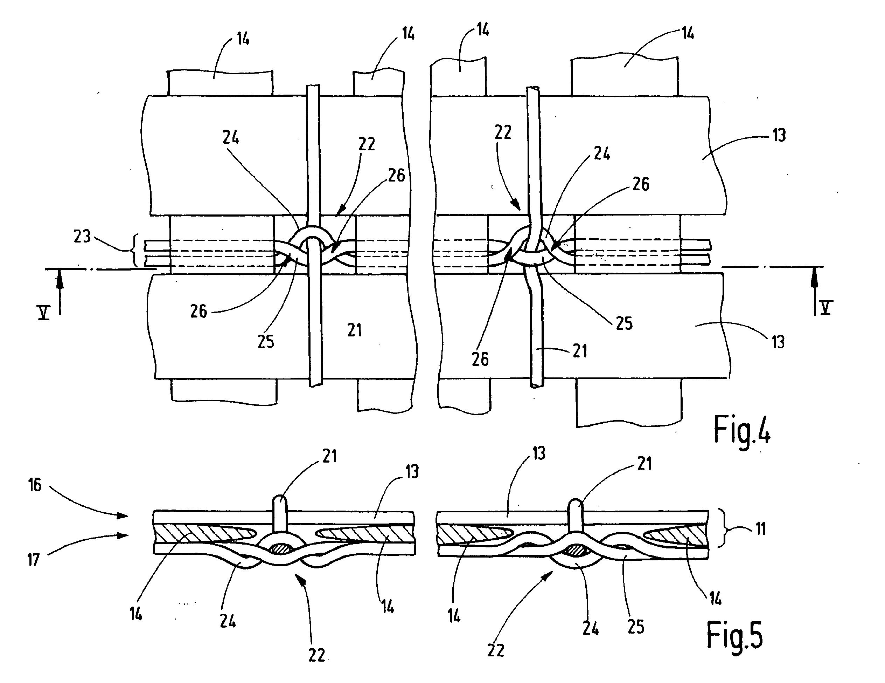

Die Bindung an den Bindungsstellen 22 ist in den Figuren 2 bis 5 näher dargestellt. Die Figuren 2 und 3 zeigen eine Halbdreherbindung, während die Figuren 4 und 5 eine Volldreherbindung veranschaulichen. Die Bindekettfäden 20 werden in Form von Kettfadenpaaren 23 angeordnet. Ein Bindekettfaden 20 eines Kettfadenpaars 23 stellt dabei einen Dreherkettfaden 24 dar, während der jeweils andere Bindekettfaden 20 als Steherkettfaden 25 dient. An den Bindungsstellen 22 verläuft der Bindeschussfaden 21 zwischen dem Dreherkettfaden 24 und dem Steherkettfaden 25 eines Kettfadenpaars 23 und wird dadurch gehalten. Auf diese Weise wird eine gute Fixierung der Relativlage der Fäden 20, 21 im Bindesystem 12 erreicht, wodurch sich eine große Verschiebefestigkeit des Gewebes 10 ergibt. Diese Verschiebefestigkeit kann ohne eine hohe Fadenspannung im Bindesystem 12 erzeugt werden. Wegen der lediglich geringen Fadenspannung ist eine Welligkeit der Verstärkungskettfäden 13 und der Verstärkungsschussfäden 14 im Verstärkungssystem 11 vermieden. Die gestreckten Verstärkungsfäden 13, 14 gewährleisten die gewünschten mechanischen Eigenschaften des Verbundwerkstoffes.

Der Steherkettfaden 25 und der Dreherkettfaden 24 eines Kettfadenpaars 23 weisen Überkreuzungsstellen 26 auf. Beim Ausführungsbeispiel sind zwischen zwei Bindungsstellen 23 jeweils eine oder zwei Überkreuzungsstellen 26 vorgesehen. Wie dies insbesondere in den Figuren 2 bis 5 dargestellt ist, liegen die Überkreuzungsstellen 26 vorzugsweise unmittelbar von und hinter einer Bindungsstelle 23. Mit anderen Worten ist eine jeweilige Überkreuzungsstelle 26 der Bindekettfäden 20 im Bereich zwischen zwei Verstärkungskettfäden 13 und zwei Verstärkungsschussfäden 14 angeordnet, an dem sich auch eine Bindungsstelle 23 befindet. Auf diese Weise wird der ohnehin für die Bindungsstelle 23 zwischen den Verstärkungsfäden 13, 14 des Verstärkungssystems 12 benötigte Raum auch für das Vorsehen der Überkreuzungsstellen 26 verwendet.

Bei der in den Figuren 2 und 3 dargestellten Halbdreherbindung verläuft der Dreherkettfäden 24 in Blickrichtung auf die Bindeschussfäden 21 an den Bindungsstellen 22 oberhalb des jeweiligen Bindeschussfadens 21. Entsprechend verläuft der Steherkettfaden 25 an den Bindungsstellen 22 stets auf der andren Seite unter dem Bindeschussfaden 21 hindurch. Bei der Halbdreherbindung sind lediglich an jeder zweiten Bindungsstelle 22 eines Kettfadenpaars 23 Überkreuzungsstellen 26 vorhanden und zwar jeweils vorzugsweise unmittelbar vor und hinter der Bindungsstelle 22 mit dem jeweiligen Bindeschussfaden 21.

Im Unterscheid dazu verlaufen bei der Volldreherbindung gemäß der Figuren 4 und 5 der Steherkettfaden 25 und der Dreherkettfaden 24 abwechselnd einmal oberhalb und einmal unterhalb des Bindekettfadens 21. Bei der Volldreherbindung sind an jeder Bindungsstelle 22 eines Kettfadenpaars 23 Überkreuzungsstellen 26 vorhanden und zwar jeweils vorzugsweise unmittelbar vor und hinter der Bindungsstelle 22 mit dem jeweiligen Bindeschussfaden 21.

Bei allen Bindungsarten wird jedenfalls der Bindekettfaden 21 zwischen dem Dreherkettfaden 24 und dem Steherkettfaden 25 aufgenommen und an der Bindungsstelle 22 fixiert.

Die Anzahl der Bindeschussfäden 21 ist beim Ausführungsbeispiel geringer als die Anzahl der Verstärkungsschussfäden 14. Die Anzahl der Bindungsstellen 22 im Bindesystem 12 ist dadurch kleiner als die Anzahl der Kreuzungsstellen 18 im Verstärkungssystem 11. Die Anzahl der Bindekettfadenpaare 20 ist maximal so groß wie die Anzahl der Verstärkungskettfäden 13, wobei die Anzahl vorzugsweise kleiner ist. Die Flottierung im Bindesystem 12, das heißt der Abstand zwischen den Bindungsstellen 22 kann innerhalb des Gewebes 10 konstant sein oder auch variieren. Gewebebereiche, die eine höhere Verschiebefestigkeit erfordern, können eine höhere Anzahl an Bindungsstellen 22 aufweisen. Gewebebereiche, die eine bessere Verschiebbarkeit der Verstärkungsfäden 13, 14 des Verstärkungssystems 11 erfordern, etwa um die Drapierbarkeit zu verbessern, können einen größeren Abstand von Bindungsstellen 22 und damit eine größere Flottierung aufweisen. Die Flottierung im Gewebe 10 kann in Gewebelängsrichtung und/oder in Gewebequerrichtung variieren.

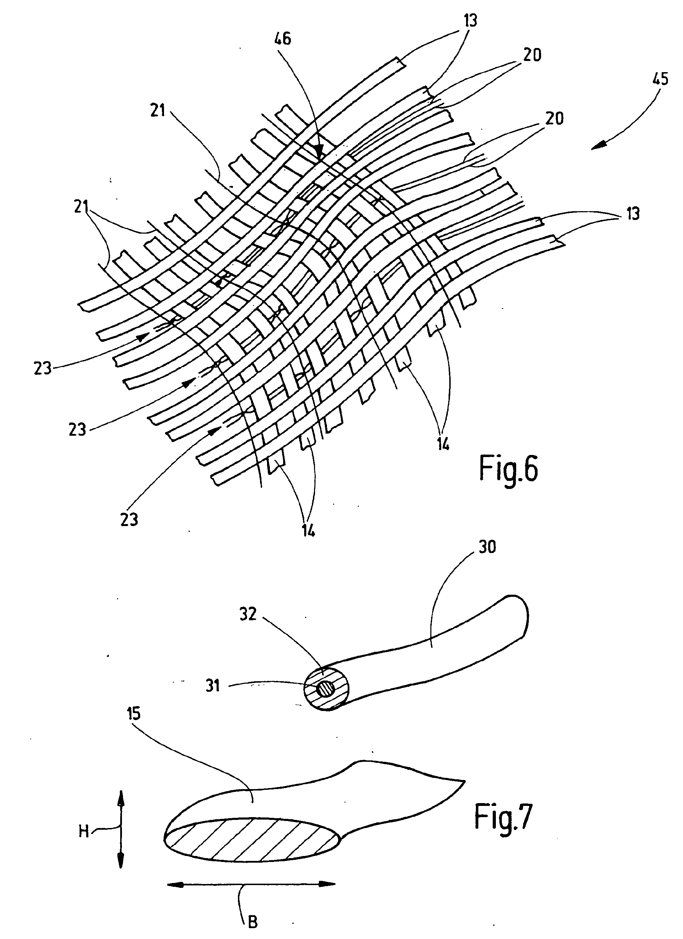

In Figur 7 ist neben dem Verstärkungsgarn 15 auch schematisch ein Bindegarn 30 veranschaulicht. Beim Ausführungsbeispiel weist das Bindegarn 30 einen kreisrunden Querschnitt auf. Der Querschnitt ist beispielsgemäß in Breitenrichtung B und/oder in Höhenrichtung H kleiner als der Querschnitt des Verstärkungsgarns 15. Vorzugsweise ist der Titer des Bindegarns 30 kleiner als der Titer des Verstärkungsgarns 15. Der Titer des Bindegarns 30 beträgt beim Ausführungsbeispiel maximal 500 dtex.

Als Bindegarn 30 wird beim bevorzugten Ausführungsbeispiel ein Schmelzklebegarn verwendet, das beispielsweise aus Co-Polyester oder aus Grilon MS® der Firma EMS Chemie besteht. Auch andere Phenoxy-Garne können eingesetzt werden. Das als Schmelzklebegarn ausgeführte Bindegarn 30 weist einen Kern 31 auf, der in Umfangsrichtung von einem Mantel 32 vollständig umschlossen ist. Der Kern 31 und der Mantel 32 bestehen aus unterschiedlichem Material. Insbesondere ist die Schmelztemperatur des Mantels 32 kleiner als die Schmelztemperatur des Kerns 31. Dadurch kann ein bei der Herstellung eines Verbundwerkstoffkörpers in eine gewünschte Form gebrachtes Gewebe 10 fixiert bzw. mit anderen Gewebelagen verbunden werden, wenn dies gewünscht ist, beispielsweise zur Herstellung einer Preform. Die Schmelzklebeverbindung mit anderen Gewebelagen kann dabei sehr einfach ohne zusätzliche Bindemittel durch thermische Einwirkung erfolgen. Gleichzeitig bleibt das Bindegarn 30 stabil, da der Kern 31 wegen seiner höheren Schmelztemperatur nicht schmilzt. In Figur 6 ist schematisch eine Formgebung eines Gewebeabschnitts dargestellt.

Das Gewebe 10 dient zur Herstellung eines Verbundwerkstoffkörpers. Soll eine Gewebelage 45, wie sie in Figur 6 veranschaulicht ist, vorfixiert und/oder mit weiteren Gewebelagen im Rahmen des Herstellungsprozesses verbunden und in einer dreidimensionalen gewünschten Form vorfixiert werden, kann die Gewebelage 45 bzw. die übereinander angeordneten Gewebelagen in einem Schmelzbereich 46 durch thermische Einwirkung behandelt werden. So kann zum Beispiel eine Preform hergestellt werden. Diese Fixierung kann aber auch erst in der abschließenden Formgebung bei der Herstellung des Verbundwerkstoffkörpers erfolgen. Dabei gehen die Bindefäden 20, 21 des Bindesystems 12 auch eine Schmelzklebeverbindung mit dem Kunststoff des Verbundwerkstoffkörpers ein. Auf diese Weise ergibt sich auch eine gute interlaminare Verbindung, was eine hohe interlaminare Scherfestigkeit des Verbundwerkstoffkörpers gewährleistet.

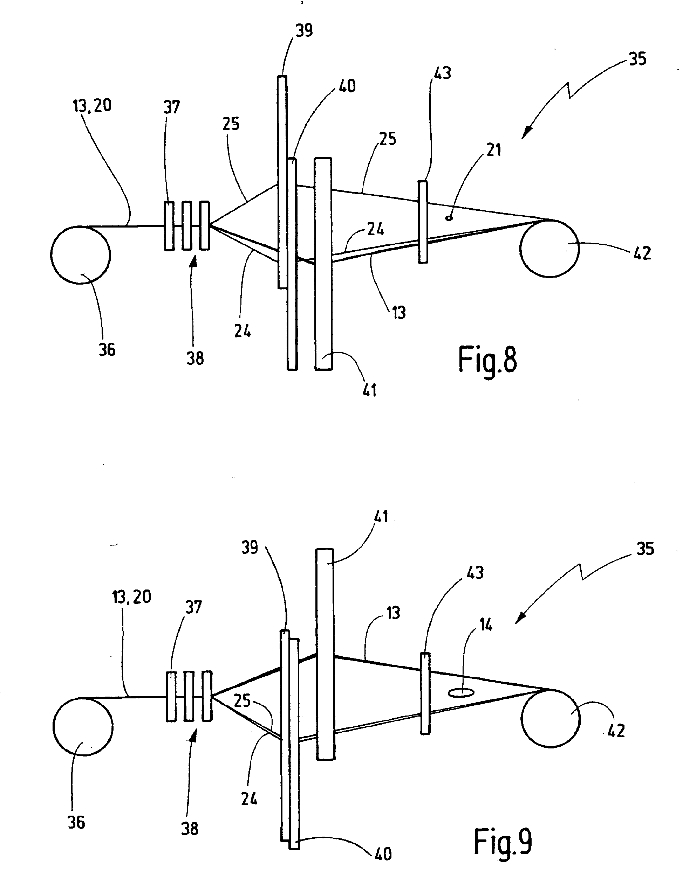

In den Figuren 8 und 9 ist schematisch eine Webmaschine 35 zur Herstellung eines Gewebes 10 dargestellt. Die Webmschine 35 weist einen Streichbaum 36 auf, über den die Kettfäden 13, 20 zugeführt werden. Die Kettfäden 13, 20 verlaufen dann durch einen Kettfadenwächter 37 und durch Lamellen 38. Im Anschluss daran sind die Webschäfte mit jeweils einer Vielzahl von Weblitzen angeordnet, die zur Fachbildung dienen. Die Steherkettfäden 25 werden in einem gemeinsamen ersten Webschaft 39 geführt. Ein zweiter Webschaft 40 führt die Dreherkettfäden 24. Über einen dritten Webschaft 41 werden die Verstärkungskettfäden 13 geführt. Zwischen den Webschäften 39, 40, 41 und einem Warenabzug 42 ist ein Riet 43 zum Anschlag des Schussfadens 21 bzw. 14 an die Gewebekante vorgesehen.

Die Drehekettfäden 24 werden im zweiten Webschaft 40 in einem Dreherwebgeschirr geführt. Ein solches System ist zum Beispiel in EP 2 063 007 A1 beschrieben, auf das in soweit Bezug genommen wird. Dort werden Halbdreherbindungen erzeugt. Alternativ hierzu sind auch Dreherwebgeschirre bekannt, um Volldreherbindungen herzustellen, die alternativ eingesetzt werden können. Zur Führung der Verstärkungskettfäden 13 sind im dritten Webschaft 41 vorzugsweise spezielle Litzen vorgesehen, die zum Beispiel aus der EP 1 795 636 A1 bekannt sind.

Beim Herstellen des Gewebes 10 mit Hilfe der Webmaschine 35 werden die Kettfäden 13, 20 über den Streichbaum 36 zugeführt. Verstärkungsschussfäden 14 und Bindeschussfäden 21 werden in einer vorgegebenen Reihenfolge eingetragen. Beim Eintrag eines Verstärkungsschussfadens 21 positioniert der erste Webschaft 39 die Steherkettfäden 25 im Oberfach. Die Dreherkettfäden 24 sowie die Verstärkungskettfäden 13 werden über die beiden Webschäfte 40, 41 im Unterfach positioniert. Abhängig von der Dreherbindung werden durch das Dreherwebgeschirr im zweiten Webschaft 40 die Überkreuzungsstellen 26 gebildet, wie sie in den Figuren 2 bis 5 erläutert wurde. Während des Eintrags eines Verstärkungsschussfadens 14 befinden sich lediglich die Verstärkungskettfäden 13 im Oberfach. Die Bindekettfäden 20, also die Dreherkettfäden 24 sowie die Steherkettfäden 25 befinden sich im Unterfach. Der Schusseintrag eines Bindeschussfadens 21 ist in Figur 8 dargestellt, wohingegen Figur 9 des Schusseintrag eines Verstärkungsschussfadens 14 veranschaulicht.

Abhängig von der Anzahl und vom Abstand der Bindungsstellen 22 werden nach einem Schusseintrag eines Bindeschussfadens 21 zwei oder mehr Verstärkungsschussfäden 14 eingetragen. Die Anzahl der zwischen zwei Bindeschussfäden 21 verlaufenden Verstärkungsschussfäden 14 kann variieren. Ebenso kann die Anzahl der Verstärkungskettfäden 13 zwischen zwei Kettfadenpaaren 23 von Bindekettfäden 12 variieren. Zu diesem Zweck kann die Webmaschine 35 auch einzelne Kettfadenpaare 23 von Bindekettfäden 20 oder einzelne Verstärkungskettfäden 13 aus dem Webprozess herausnehmen. Hierfür können nicht näher dargestellte Kettfadenhalter vorgesehen sein, die die herauszunehmenden Kettfäden 13, 20 auftrennen und im Bereich der Gewebekante vor dem Warenabzug 42 bereithalten. Der Kettfadenhalter ist zum Ergreifen und Positionieren des aufzutrennenden Kettfadens im Raum bewegbar. Die Webmaschine 35 kann auch über mehrere solcher Kettfadenhalter verfügen.

Ferner kann die Webmaschine 35 eine nicht dargestellte Halteeinrichtung aufweisen, der der Kettfadenhalter den aufgetrennten und herausgenommenen Kettfaden zuführt, so dass die Halteeinrichtung den Kettfaden in einer gewünschten Position zum späteren erneuten Zuführen bereithalten kann.

Die vorliegende Erfindung betrifft ein Gewebe 10 zur Verwendung in Verbundwerkstoffen und Verbundwerkstoffkörpern. Das Gewebe 10 weist ein Verstärkungssystem 11 aus Verstärkungskettfäden 13 und Verstärkungsschussfäden 14 auf, die bindungslos in zwei verschiedenen Verstärkungslagen 16, 17 übereinander gelegt sind und sozusagen ein Gelege darstellen. Die Verstärkungsfäden 13, 14 sind von einem Verstärkungsgarn 15 gebildet. Aus einem Bindegarn 30 mit geringerem Titer als das Verstärkungsgarn 15 ist ein Bindesystem 12 aus Bindekettfäden 20 und Bindeschussfäden 21 gebildet. Die Gewebebindung erfolgt ausschließlich innerhalb des Bindesystems 12. Das Verstärkungssystem 11 ist zwischen den Bindekettfäden 20 einerseits und den Bindeschussfäden 21 andererseits eingefasst und dadurch gehalten. Im Bindesystem 12 sind Bindungsstellen 22 vorgesehen. An jeder Bindungsstelle 22 ist ein Bindekettfaden 20 zwischen einem Steherkettfaden 25 und einem Dreherkettfaden 24 eines Kettfadenpaars 23 von Bindekettfäden 20 hindurch geführt und gehalten. Zwischen zwei benachbarten Bindungsstellen 22 eines Kettfadenpaars 23 weisen der Steherkettfaden 24 und der Dreherkettfaden 24 wenigstens eine Überkreuzungsstelle 26 auf. Alle Kettfäden 13, 20 verlaufen in eine Kettfadenrichtung K im Wesentlichen parallel zueinander. Alle Schussfäden 14, 21 verlaufen in eine Schussfadenrichtung S im Wesentlichen parallel zueinander und quer zur Kettfadenrichtung K.

### Bezugszeichenliste:

- 10: Gewebe
- 11: Verstärkungssystem
- 12: Bindesystem
- 13: Verstärkungskettfaden
- 14: Verstärkungsschussfaden
- 15: Verstärkungsgarn
- 16: erste Verstärkungslage
- 17: zweite Verstärkungslage
- 18: Kreuzungsstelle

- 20: Bindekettfaden
- 21: Bindeschussfaden
- 22: Bindungsstelle
- 23: Kettfadenpaar
- 24: Dreherkettfaden
- 25: Steherkettfaden
- 26: Überkreuzungsstelle

- 30: Bindegarn
- 31: Kern
- 32: Mantel

- 35: Webmaschine
- 36: Streichbaum
- 37: Kettfadenwächter
- 38: Lamellen
- 39: erster Webschaft
- 40: zweiter Webschaft
- 41: dritter Webschaft
- 42: Warenabzug
- 43: Riet

- 45: Gewebelage
- 46: Schmelzbereich

- B: Breitenrichtung
- H: Höhenrichtung
- K: Kettfadenrichtung
- S: Schussfadenrichtung

## Patentansprüche

1. Gewebe (10) zur Verwendung in Verbundwerkstoffen
mit einem Verstärkungssystem (11) aus Verstärkungskettfäden (13) und Verstärkungsschussfäden (14), wobei die Verstärkungskettfäden (13) eine erste Verstärkungslage (16) bilden, an die die Verstärkungsschussfäden (14) ohne Bindung mit den Verstärkungskettfäden (13) unter Bildung einer zweiten Verstärkungslage (17) gelegt sind,
mit einem Bindesystem (12) aus Bindekettfäden (20) und Bindeschussfäden (21), wobei das Verstärkungssystem (11) zwischen den Bindeschussfäden (21) und den Bindekettfäden (20) eingefasst ist, **dadurch gekennzeichnet, dass** jeweils zwei unmittelbar benachbarte Bindekettfäden (20) als Steherkettfaden (25) und Dreherkettfaden (24) dienen, die sich mehrfach kreuzen und wobei ein Bindeschussfaden (21) an einer Bindungsstelle (22) zwischen dem Steherkettfaden (25) und dem Dreherkettfaden (24) verläuft.

2. Gewebe (10) nach Anspruch 1,
**dadurch gekennzeichnet, dass** die Überkreuzungsstellen (26) zwischen dem Steherkettfaden (25) und dem Dreherkettfaden (24) an der Bindungsstelle (22) mit dem Bindeschussfaden (21) liegen.

3. Gewebe (10) nach Anspruch 1,
**dadurch gekennzeichnet, dass** die Bindekettfäden (20) gegenüber den Verstärkungskettfäden (13) kreuzungsfrei angeordnet sind und/oder dass die Bindeschussfäden (21) gegenüber den Verstärkungsschussfäden (14) kreuzungsfrei angeordnet sind.

4. Gewebe (10) nach Anspruch 1,
**dadurch gekennzeichnet, dass** die Anzahl der Kreuzungsstellen (18) des Verstärkungssystems (11) gleich oder größer ist als die Anzahl der Bindungsstellen (22) im Bindesystem (12).

5. Gewebe (10) nach Anspruch 1,
**dadurch gekennzeichnet, dass** die Verstärkungskettfäden (13) in der ersten Verstärkungslage (16) und die Verstärkungsschussfäden (14) in der zweiten Verstärkungslage (17) gestreckt angeordnet sind.

6. Gewebe (10) nach Anspruch 1,
**dadurch gekennzeichnet, dass** das Verstärkungssystem (11) aus einem Verstärkungsgarn (15) und das Bindesystem aus einem Bindegarn (30) hergestellt ist, wobei der Bindegarn (30) im Querschnitt kleiner ist oder einen geringeren Titer aufweist als der Verstärkungsgarn (15) .

7. Gewebe (10) nach Anspruch 6,
**dadurch gekennzeichnet, dass** das Verstärkungsgarn (15) Karbon- und/oder Aramid- und/oder Glasfasern aufweist.

8. Gewebe (10) nach Anspruch 6,
**dadurch gekennzeichnet, dass** das Verstärkungsgarn (15) einen Flachquerschnitt aufweist, dessen Dimension in eine Richtung (B) größer ist als die Dimension rechtwinkelig dazu.

9. Gewebe (10) nach Anspruch 6,
**dadurch gekennzeichnet, dass** das Bindegarn (30) aus einem Material besteht, der sich bei der Herstellung des Verbundwerkstoffes im Wesentlichen vollständig mit dem Kunststoff des Verbundwerkstoffes verbindet.

10. Gewebe (10) nach Anspruch 6,
**dadurch gekennzeichnet, dass** das Material und der Titer des Bindegarns (30) derart festgelegt sind, dass die interlaminare Scherfestigkeit des herzustellenden Verbundwerkstoffes von einem durch das Verstärkungssystem (11) vorgegebenen Sollwert maximal um einen vorgegebenen Toleranzwert abweicht.

11. Gewebe (10) nach Anspruch 4,
**dadurch gekennzeichnet, dass** das Bindegarn (30) Kunststoff enthält uns insbesondere ein Phenoxy-Garn ist.

12. Gewebe (10) nach Anspruch 4,
**dadurch gekennzeichnet, dass** das Bindegarn (30) einen Kern (31) und einen den Kern (31) umschließenden Mantel (32) aufweist, wobei der Kern (31) eine höhere Schmelztemperatur hat als der Mantel (32).

13. Verfahren zur Herstellung eines Gewebes (10) zur Verwendung in Verbundwerkstoffen mit folgenden Schritten:
Bestücken einer Webmaschine (35) mit Verstärkungskettfäden (13) und Bindekettfäden (20) sowie Verstärkungsschussfäden (14) und Bindeschussfäden (21),
Einschießen der Verstärkungsschussfäden (14) und Bindeschussfäden (21) in einer vorgegebenen Reihenfolge,
wobei sich bei einem Schusseintrag mit einem Verstärkungsschussfaden (14) alle Verstärkungskettfäden (13) immer in demselben Oberfach oder Unterfach befinden,
und wobei sich bei einem Schusseintrag mit einem Bindeschussfaden (21) ein als Dreherkettfaden (24) dienender Bindekettfaden (20) jeweils in demselben Oberfach oder Unterfach befindet, während sich ein als Steherkettfaden (25) dienender Bindekettfaden (20) sowie die Verstärkungskettfäden (13) im jeweils anderen Fach befinden,
Überkreuzen des Dreherkettfaden (24) mit dem Steherkettfaden (25) zwischen den Schusseinträgen mit dem Bindeschussfaden (21),
wodurch ein Verstärkungssystem (11) aus Verstärkungsschussfäden (14) und Verstärkungskettfäden (13) gebildet wird, bei dem die Verstärkungskettfäden (13) eine erste Verstärkungslage (16) bilden, an die die Verstärkungsschussfäden (14) ohne Bindung mit den Verstärkungskettfäden (13) unter Bildung einer zweiten Verstärkungslage (17) gelegt sind,
und wodurch ein Bindesystem (12) aus Bindeschussfäden (21) und Bindekettfäden (20) gebildet wird, das das Verstärkungssystem (11) eingefasst.

14. Verfahren nach Anspruch 13,
**dadurch gekennzeichnet, dass** die Verstärkungskettfäden (13) in einem einzigen gemeinsamen Webschaft (41) der Webmaschine (35) geführt werden und dass die Steherkettfäden (25) und die Dreherkettfäden (24) in unterschiedlichen Webschäften (39, 40) der Webmaschine (35) geführt werden.

15. Verfahren zur Herstellung eines Verbundwerkstoffkörpers mit wenigstens einer Gewebelage aus Gewebe (10) nach einem der Ansprüche 1 bis 12,
wobei zur Anpassung des Gewebes (10) an die gewünschte Form des Verbundwerkstoffkörpers an zumindest einem Schmelzbereich (46) ein Schmelzen der Fäden (20, 21) des Bindesystems (12) durch thermische Einwirkung erfolgt.

## Claims

1. Woven fabric (10) for use in composite materials,
with a reinforcement system (11) comprising reinforcing warp threads (13) and reinforcing weft threads (14), wherein the reinforcing warp threads (13) form a first reinforcing layer (16), onto which the reinforcing weft threads (14) are laid without binding to the reinforcing warp threads (13) to form a second reinforcing layer (17), with a binding system (12) comprising binding warp threads (20) and binding weft threads (21), wherein the reinforcement system (11) is bound between the binding weft threads (21) and the binding warp threads (20), **characterised in that** two respective directly adjacent binding warp threads (20) serve as ground warp threads (25) and leno warp threads (24), which cross multiple times and wherein a binding weft thread (21) runs between the ground warp thread (25) and the leno warp thread (24) at a binding point (22).

2. Woven fabric (10) according to claim 1, **characterised in that** the crossover points (26) between the ground warp thread (25) and the leno warp thread (24) lie at the binding point (22) with the binding weft thread (21).

3. Woven fabric (10) according to claim 1, **characterised in that** the binding warp threads (20) are arranged crossing free in relation to the reinforcing warp threads (13) and/or that the binding weft threads (21) are arranged crossing free in relation to the reinforcing weft threads (14).

4. Woven fabric (10) according to claim 1, **characterised in that** the number of crossing points (18) of the reinforcement system (11) is equal to or greater than the number of binding points (22) in the binding system (12).

5. Woven fabric (10) according to claim 1, **characterised in that** the reinforcing warp threads (13) are arranged drawn in the first reinforcing layer (16) and the reinforcing weft threads (14) are arranged drawn in the second reinforcing layer (17).

6. Woven fabric (10) according to claim 1, **characterised in that** the reinforcement system (11) is produced from a reinforcing yarn (15) and the binding system is produced from a binding yarn (30), wherein the binding yarn (30) is smaller in cross-section or has a smaller titre than the reinforcing yarn (15).

7. Woven fabric (10) according to claim 6, **characterised in that** the reinforcing yarn (15) has carbon and/or aramide and/or glass fibres.

8. Woven fabric (10) according to claim 6, **characterised in that** the reinforcing yarn (15) has a flat cross-section, the dimension of which is larger in one direction (B) than the dimension at right angles thereto.

9. Woven fabric (10) according to claim 6, **characterised in that** the binding yarn (30) is made from a material, which during the production of the composite material bonds substantially completely with the plastic of the composite material.

10. Woven fabric (10) according to claim 6, **characterised in that** the material and the titre of the binding yarn (30) are fixed in such a manner that the interlaminar shear strength of the composite material to be produced differs from a desired value predetermined by the reinforcement system (11) at maximum by a predetermined tolerance value.

11. Woven fabric (10) according to claim 4, **characterised in that** the binding yarn (30) contains plastic and in particular is a phenoxy yarn.

12. Woven fabric (10) according to claim 4, **characterised in that** the binding yarn (30) has a core (31) and a sheath (32) enveloping the core (31), wherein the core (31) has a higher melting temperature than the sheath (32).

13. Method for producing a woven fabric (10) for use in composite materials with the following steps:
loading a loom (35) with reinforcing warp threads (13) and binding warp threads (20) as well as reinforcing weft threads (14) and binding weft threads (21),
inserting the reinforcing weft threads (14) and binding weft threads (21) in a predetermined sequence,
wherein during a weft insertion with a reinforcing weft thread (14) all the reinforcing warp threads (13) are always located in the same upper shed or lower shed,
and wherein during a weft insertion with a binding weft thread (21) a binding warp thread (20) serving as leno warp thread (24) is respectively located in the same upper shed or lower shed, whereas a binding warp thread (20) serving as ground warp thread (25) as well as the reinforcing warp threads (13) are located in the respective other shed,
crossing over the leno warp thread (24) with the ground warp thread (25) between the weft inserts with the binding weft thread (21),
as a result of which a reinforcement system (11) comprising reinforcing weft threads (14) and reinforcing warp threads (13) is formed, in which the reinforcing warp threads (13) form a first reinforcing layer (16), onto which the reinforcing weft threads (14) are laid without binding to the reinforcing warp threads (13) to form a second reinforcing layer (17),
and as a result of which a binding system (12) comprising binding weft threads (21) and binding warp threads (20) is formed, which binds the reinforcement system (11).

14. Method according to claim 13, **characterised in that** the reinforcing warp threads (13) are guided in a single common heald frame (41) of the loom (35) and that the ground warp threads (25) and the leno warp threads (24) are guided in different heald frames (39, 40) of the loom (35).

15. Method for producing a composite material body with at least one fabric layer of woven fabric (10) according to one of claims 1 to 12,
wherein to adapt the woven fabric (10) to the desired shape of the composite material body in at least one melting zone (46) a melting of the threads (20, 21) of the binding system (12) is conducted by thermal action.

## Revendications

1. Tissu (10) destiné à être utilisé dans des matériaux composites comportant un agencement de renforcement (1) constitué de fils de chaîne de renforcement (13) et de fils de trame de renforcement (14), les fils de chaîne de renforcement (13) constituant une première couche de renforcement (16) sur laquelle sont posés les fils de trame de renforcement (14) sans liaison avec les fils de chaîne de renforcement (13) avec formation d'une deuxième couche de renforcement (17),
comportant un agencement de liaison (12) constitué de fils de chaîne de liaison (20) et de fils de trame de liaison (21), l'agencement de renforcement (11) étant incorporé entre les fils de trame de liaison (21) et les fils de chaîne de liaison (20), **caractérisé en ce que** dans chaque cas deux fils de chaîne de liaison (20) immédiatement voisins servent de fil de chaîne de base (25) et de fil de chaîne tournant (24) qui se croisent plusieurs fois et un fil de trame de liaison (21) s'étendant entre le fil de chaîne de base (25) et le fil de chaîne tournant (24) au niveau d'un emplacement de liaison.

2. Tissu (10) selon la revendication 1
**caractérisé en ce que** les emplacements de croisement (26) entre le fil de chaîne de base (25) et le fil de chaîne tournant (24) sont situés à l'emplacement de liaison (22) avec le fil de trame de liaison (21).

3. Tissu (10) selon la revendication 1
**caractérisé en ce que** les fils de chaîne de liaison (20) sont disposés sans croisement avec les fils de chaîne de renforcement (13) et/ou **en ce que** les fils de trame de liaison (21) sont disposés sans croisement avec les fils de trame de renforcement (14).

4. Tissu (10) selon la revendication 1
**caractérisé en ce que** le nombre des emplacements de croisement (18) de l'agencement de renforcement (11) est égal ou supérieur au nombre des emplacements de liaison (22) dans l'agencement de liaison (12).

5. Tissu (10) selon la revendication 1
**caractérisé en ce que** les fils de chaîne de renforcement (13) sont disposés sous tension dans la première couche de renforcement (16) et **en ce que** les fils de trame de renforcement (14) sont disposés sous tension dans la deuxième couche de renforcement (17).

6. Tissu (10) selon la revendication 1
**caractérisé en ce que** l'agencement de renforcement (11) est obtenu à partir d'un fil de renforcement (15) et **en ce que** le système de liaison est obtenu à partir d'un fil de liaison (30) qui a une section plus faible ou qui présente un titre plus faible que le fil de renforcement (15).

7. Tissu (10) selon la revendication 6
**caractérisé en ce que** le fil de renforcement (15) comporte des fibres de carbone et/ou des fibres d'aramide et/ou des fibres de verre.

8. Tissu (10) selon la revendication 6
**caractérisé en ce que** le fil de renforcement (15) présente une section plate dont la dimension est plus importante dans une direction (B) que la dimension perpendiculaire à celle-ci.

9. Tissu (10) selon la revendication 6
**caractérisé en ce que** le fil de liaison (30) est constitué d'un matériau qui, lors de la fabrication du matériau composite, se lie essentiellement complètement à la matière de synthèse du matériau composite.

10. Tissu (10) selon la revendication 6
**caractérisé en ce que** le matériau et le titre du fil de liaison (30) sont déterminés de telle manière que la résistance au cisaillement interlamellaire du matériau composite à fabriquer s'écarte d'au maximum une valeur de tolérance prescrite à l'avance d'une valeur prescrite à l'avance pour le système de renforcement (11).

11. Tissu (10) selon la revendication 4
**caractérisé en ce que** le fil de liaison (30) contient de la matière de synthèse et en particulier est un fil de résine phénoxy.

12. Tissu (10) selon la revendication 4
**caractérisé en ce que** le fil de liaison (30) présente une âme (31) et une enveloppe (32) entourant l'âme (31), l'âme (31) ayant une température de fusion supérieure à celle de l'enveloppe (32).

13. Procédé de fabrication d'un tissu (10) destiné à être utilisé dans des matériaux composites, comportant les étapes suivantes :
garnissage d'une machine à tisser (35) au moyen de fils de chaîne de renforcement (13) et de fils de chaîne de liaison (20) ainsi que de fils de trame de renforcement (14) et de fils de trame de liaison (21),
introduction de fils de trame de renforcement (14) et de fils de trame de liaison (21) selon un ordre déterminé à l'avance,
tous les fils de chaîne de renforcement (13) se trouvant toujours dans la même foule supérieure ou dans la même foule inférieure, lors de l'introduction de trame au moyen d'un fil de trame de renforcement (14),
un fil de chaîne de liaison (20) servant de fil de chaîne tournant (24), se trouvant dans chaque cas, lors de l'introduction de trame au moyen d'un fil de trame de liaison (21), dans la même foule supérieure ou la même foule inférieure, tandis qu'un fil de chaîne de liaison (20) servant de fil de chaîne de base (25), ainsi que le fil de chaîne de renforcement (13) se trouvant dans chaque cas dans l'autre foule,
croisement du fil de chaîne tournant (24) avec le fil de chaîne de base (25) entre les introductions de trame au moyen du fil de trame de liaison (21),
grâce à quoi un agencement de renforcement (11) est constitué de fils de trame de renforcement (14) et de fils de chaîne de renforcement (13), dans lequel les fils de chaîne de renforcement (13) forment une première couche de renforcement (16) sur laquelle sont placés les fils de trame de renforcement (14) sans liaison avec les fils de chaîne de renforcement (13) avec formation d'une deuxième couche de renforcement (17),
et grâce à quoi, un agencement de liaison (12) se trouve formé de fils de trame de liaison (21) et de fils de chaîne de liaison (20), lequel agencement de liaison incorpore l'agencement de renforcement (11).

14. Procédé selon la revendication 13
**caractérisé en ce que** les fils de chaîne de renforcement (13) sont guidés dans une unique lame de tissage (41) commune de la machine à tisser (35) et **en ce que** les fils de chaîne de base (25) et les fils de chaîne tournant (24) sont guidés dans des lames de tissage différentes (39, 40) de la machine à tisser (35).

15. Procédé de fabrication d'un corps de matériau composite comportant au moins une couche de tissu constituée d'un tissu (10) selon une des revendications 1 à 12,
une fusion des fils (20, 21) du système de liaison (12) étant effectuée grâce à un effet thermique, en vue de l'adaptation du tissu (10) à la forme souhaitée pour le corps de matériau composite au niveau d'au moins une zone de fusion (46).
